# EUROPÄISCHE PATENTSCHRIFT

(11) **EP 3 699 253 B1**
(45) Veröffentlichungstag und Bekanntmachung des Hinweises auf die Patenterteilung: **15.09.2021**
(21) Anmeldenummer: 20158137.8
(22) Anmeldetag: 19.02.2020
(51) Int. Cl.: C09K 5/16, B01J 20/32, F28D 20/00, F25B 37/00, B01J 20/28

(54) **GRANULAT FÜR EINEN THERMOCHEMISCHEN WÄRMESPEICHER UND VERFAHREN ZUM HERSTELLEN VON GRANULAT FÜR EINEN THERMOCHEMISCHEN WÄRMESPEICHER**
GRANULATE FOR A THERMOCHEMICAL HEAT ACCUMULATOR AND METHOD FOR PRODUCING GRANULATE FOR A THERMOCHEMICAL HEAT ACCUMULATOR
GRANULÉS POUR UN ACCUMULATEUR DE CHALEUR THERMOCHIMIQUE ET PROCÉDÉ DE FABRICATION DE GRANULÉS POUR UN ACCUMULATEUR DE CHALEUR THERMOCHIMIQUE

(30) Priorität: 19.02.2019 DE 102019104083
(43) Veröffentlichungstag der Anmeldung: 26.08.2020
(73) Patentinhaber: Fraunhofer-Gesellschaft zur Förderung der angewandten Forschung e.V., 80686 München (DE)
(72) Erfinder: KRÄTZSCHMAR, Bernd-Georg, 01277 Dresden (DE); FIETZKE, Fred, 01277 Dresden (DE); HEINß, Jens-Peter, 01277 Dresden (DE)

(56) Entgegenhaltungen:
- DE-A1-102014 104 719
- DE-A1-102015 108 095
- US-A1- 2014 175 328

## Beschreibung

Die Erfindung betrifft Granulat, welches insbesondere bei einem nach dem thermochemischen Prinzip wirkenden Wärmespeicher verwendet werden kann sowie ein Verfahren zum Herstellen von Granulat für einen thermochemischen Wärmespeicher.

Eine oftmals nur lose Schüttung aus Granulatkörnern stellt die Basis bei gängigen thermochemischen Wärmespeichern dar. Dabei bestehen die Granulatkörner aus einem sorptionsfähigen Material, welches bei einer exothermen Reaktion Wasser bindet und dabei Wärme abgibt. Das Binden des Wassers im Granulat erfolgt vornehmlich an der inneren Oberfläche des Granulats, weshalb bevorzugt poröses, sorptionsfähiges Material verwendet wird. Wird dem Granulat hingegen Wärme zugeführt, dann wird das im Granulat gespeicherte Wasser in Form von Wasserdampf an die Umgebung der Granulatkörner abgegeben.

Bei einem thermochemischen Wärmespeicher befindet sich die Schüttung aus Granulatkörnern in einem Behältnis. In einer Desorptionsphase wird das Granulat getrocknet. Infolge von Wärmezufuhr wird das am Granulat gebundene Wasser ausgetrieben und strömt als heißer Wasserdampf zu einem Wärmetauscher, in welchem der Wasserdampf kondensiert. Die dabei frei werdende Energie kann beispielsweise als Nutzwärme an einen Heizkreislauf abgegeben werden. Dieser Vorgang kann so lange fortgeführt werden, bis das Granulat kein Wasser mehr abgibt. Der Wärmetauscher mit dem kondensierten Wasser ist oftmals unterhalb der Granulatschüttung angeordnet. Bei der Adsorptionsphase eines thermochemischen Wärmespeichers wird das im Wärmetauscher zuvor kondensierte Wasser wieder verdampft. Der Wasserdampf strömt nach oben zum Granulat, wird von diesem adsorbiert und setzt dabei Adsorptionswärme frei, welche ebenfalls für einen Heizkreislauf verwendet werden kann.

Als Granulat für thermochemische Wärmespeicher werden vornehmlich Silikate, wie zum Beispiel Zeolithe, oder Metallhydride verwendet. In DE 10 2006 043 648 A1 wird aufgezeigt, dass für einen Wärmespeicher geeignetes Granulatmaterial auch aus hydrophilen und porösen metallorganischen Gerüststrukturen bestehen kann. In Anlehnung an den hierfür verwendeten englischen Fachbegriff "metal-organic framework" werden derartige Materialien auch als MOFs bezeichnet.

Der Zeitzyklus, mit welchem ein thermochemischer Wärmespeicher betrieben wird, kann verschiedenartig ausgelegt sein. So kann zum Beispiel die über einen Sommer hinweg mit Solarzellen gewonnene Energie verwendet werden, um das Granulat eines Wärmespeichers in seiner Desorptionsphase zu trocken, während im Winter die Adsorptionsphase des Wärmespeichers durchgeführt und die dabei gewonnene Adsorptionswärme zum Heizen verwendet wird. Alternativ kann ein thermochemischer Wärmespeicher auch im Tag-Nacht-Zyklus betrieben werden, so dass bei Tageslicht die Desorptionsphase und bei Dunkelheit die Adsorptionsphase durchgeführt wird. Noch kürzere Zyklen können umgesetzt werden, wenn zwei thermochemische Wärmespeicher beispielsweise gegenläufig gekoppelt werden (Paul Feddeck, Dr. Franz Meyer, "Heizen mit Zeolith-Heizgerät", Projektinfo 02/05, BINE Informationsdienst). D.h, wenn ein erster Wärmespeicher in seiner Adsorptionsphase Adsorptionswärme erzeugt, wird mit dieser Adsorptionswärme das Granulat eines zweiten Wärmespeichers getrocknet und umgekehrt.

Bei einer weiteren Ausgestaltungsform von Wärmespeichern werden die Granulatkörner mit einer maximal 30 µm dicken elektrisch leitfähigen Schicht versehen (DE 10 2014 104 719 A1). Hierbei wird dann das Granulat mittels Stromdurchfluss erhitzt und auf diese Weise in den Desorptionsphasen das Granulat getrocknet.

Allen thermochemischen Wärmespeichern ist gemein, dass deren Zeitspannen für das Durchlaufen von Adsorptions- und Desorptionsphasen nach unten hin, vor allem durch die relativ schlechte Wärmeleitfähigkeit des zur Verfügung stehenden Granulats, limitiert sind. Sollen die Zeitzyklen von thermochemischen Wärmespeichern noch weiter verkürzt werden, so gilt es vornehmlich die Wärmeleitfähigkeit der gesamten Granulatschüttung zu erhöhen.

Aus Ulrik Neupert et. al, "Energiespeicher - Technische Grundlagen und energiewirtschaftliches Potenzial, Seiten 70 - 84, ist es bekannt, das Behältnis für die Granulatschüttung mit senkrechten Lamellen aus Metall zu durchziehen, welche die Wärme schneller in die Granulatschüttung hinein- bzw. aus der Granulatschüttung herausleitet. Einerseits ist dann jedoch beim Herstellen eines Wärmespeichers ein erhöhter Aufwand zu betreiben, andererseits wird damit die Wärmeleitfähigkeit der gesamten Granulatschüttung aber auch nur unwesentlich erhöht, weil lediglich die an die Metalllamellen angrenzenden Granulatkörner die Metalllamellen punktuell berühren. Darüber hinaus wird durch die Lamellen die Durchströmbarkeit des Wärmespeichers mit dem Arbeitsmedium Wasserdampf herabgesetzt.

Der Erfindung liegt daher das technische Problem zugrunde, ein Granulat für einen thermochemischen Wärmespeicher und ein Verfahren zum Herstellen von Granulat für einen thermochemischen Wärmespeicher zu schaffen, mittels deren die Nachteile aus dem Stand der Technik überwunden werden können. Insbesondere soll das erfindungsgemäße Granulat eine bessere Wärmeleitfähigkeit gegenüber dem Stand der Technik aufweisen, so dass kürzere Adsorptions- und Desorptions-Zyklen bei thermochemischen Wärmespeichern ermöglicht werden.

Die Lösung des technischen Problems ergibt sich durch Gegenstände mit den Merkmalen der unabhängigen Patentansprüche 1 und 8. Weitere vorteilhafte Ausgestaltungen der Erfindung ergeben sich aus den abhängigen Ansprüchen.

Ein erfindungsgemäßes Granulat für einen thermochemischen Wärmespeicher umfasst Granulatkörner aus einem sorptionsfähigen Material, wobei die Granulatkörner eine äußere Schicht mit einer Schichtdicke größer als 30 µm aufweisen und wobei das Schichtmaterial mindestens eines der Elemente Aluminium, Kupfer und Magnesium umfasst. Die zuvor genannten chemischen Elemente weisen eine gute Wärmeleitfähigkeit auf, so dass in einer Schüttung aneinandergrenzende Granulatkörner, welche mit einer solchen Schicht versehen sind, die Wärme besser in die Schüttung hinein- und auch wieder aus der Schüttung herausleiten können als dies im Stand der Technik möglich ist. Dadurch sind kürzere Zyklen für Adsorptionsphase und Desorptionsphase bei thermochemischen Wärmespeichern gegenüber dem Stand der Technik möglich.

Besonders geeignet als Schichtmaterial für die äußere Schicht bei erfindungsgemäßem Granulat ist Aluminium. Aluminium ist relativ preiswert, weist eine gute Wärmeleitfähigkeit auf und lässt sich mit geeigneten Verfahren gut auf Granulatkörnern abscheiden.
Bei einer Ausführungsform weist die äußere Schicht der Granulatkörner deshalb einen Aluminium-Masseanteil von mindestens 50 % auf.

Als Granulatkörner für ein erfindungsgemäßes Granulat sind alle Materialien verwendbar, die auch im Stand der Technik als Granulat für thermochemische Wärmespeicher verwendet werden, wie zum Beispiel Silikate, Metallhydride, MOFs und/oder auch solche Materialien, die unter dem englischsprachigen Fachbegriff "Selective Water Sorbents" bekannt sind. Besonders geeignet sind zum Beispiel Granulatkörner aus Zeolithen, weil sich diese durch eine geeignete Porosität auszeichnen, gute Sorptionseigenschaften aufweisen und preiswert herstellbar sind.

Die für erfindungsgemäßes Granulat verwendeten Körner weisen die gleichen Abmessungen auf, wie die im Stand der Technik verwendeten Korngrößen und haben einen mittleren Durchmesser im Bereich von 0,2 mm bis 20 mm. Besonders geeignet für thermochemische Wärmespeicher sind erfindungsgemäße Granulatkörner mit einem mittleren Durchmesser im Bereich von 1 mm bis 5 mm.

Damit eine gute Wärmeleitung innerhalb einer Schüttung aus erfindungsgemäßem Granulat ausgebildet werden kann, muss die äußere Schicht der Granulatkörner mindestens 30 µm dick sein. Besonders geeignet sind Schichtdicken im Bereich von 50 µm bis 200 µm.

Eine wesentliche Funktion von Granulat für einen thermochemischen Wärmespeicher ist das Sorptionsvermögen von Wasser, welches durch eine äußere Schicht der Granulatkörner beim erfindungsgemäßen Granulat nicht wesentlich beeinträchtigt werden darf. Hierfür ist es erforderlich, dass die äußere Schicht auf den Granulatkörnern eine Porosität aufweist, welche eine Sorption von Wasser weiterhin ermöglicht. Es hat sich gezeigt, dass eine Porosität der äußeren Schicht von mindestens 2 % hinreichend ist, um eine gute Sorptionsfähigkeit des Granulats zu gewährleisten. Bei einer Ausführungsform weist die äußere Schicht der Granulatkörner daher eine Porosität von mindestens 2 % auf. Unter einer Porosität von 2 % ist zu verstehen, dass 2% des Schichtvolumens aus Poren bestehen.

Beim erfindungsgemäßen Verfahren zum Herstellen von Granulat für einen thermochemischen Wärmespeicher, umfassend Granulatkörner aus einem sorptionsfähigen Material, wird auf den Granulatkörnern eine Schicht mit einer Schichtdicke größer 30 µm abgeschieden, wobei das Schichtmaterial mindestens eines der Elemente Aluminium, Kupfer und Magnesium aufweist. Dabei wird die Schicht bevorzugt mit einer Schichtdicke von 50 µm bis 200 µm abgeschieden. Bei einer Ausführungsform wird die Schicht mit einer Porosität größer als 2 % abgeschieden.

Die Schicht auf den Granulatkörnern kann beispielsweise mittels chemischer oder physikalischer Dampfabscheidung abgeschieden werden. Besonders geeignet zum Abscheiden einer Schicht auf Granulatkörnern ist das thermische Verdampfen des Schichtmaterials, weil beim thermischen Verdampfen lediglich ein relativ lockeres Schichtgefüge entsteht, das eine hinreichende Porosität aufweist, welche das Sorptionsvermögen des Granulats nicht wesentlich beeinträchtigt.

Bei einer weiteren Ausführungsform wird die Schicht auf den Granulatkörnern mittels thermischen Verdampfens von Aluminium abgeschieden.

Die Erfindung wird nachfolgend anhand von Ausführungsbeispielen näher beschrieben. Die Fig. zeigen:
- Fig. 1: eine schematische Schnittdarstellung einer Vorrichtung, welche zum Ausführen des erfindungsgemäßen Verfahrens geeignet ist;
- Fig. 2: eine schematische Schnittdarstellung eines Granulatkorns von erfindungsgemäßem Granulat.

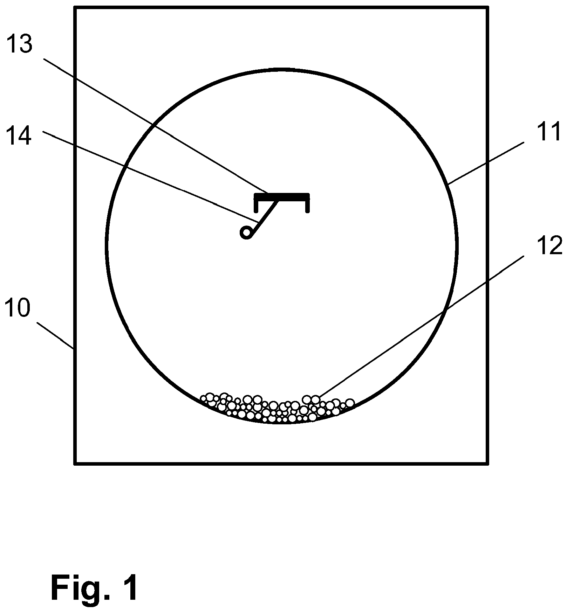

In Fig. 1 ist eine Vorrichtung schematisch dargestellt, mit der das erfindungsgemäße Verfahren ausgeführt werden kann. Innerhalb einer Vakuumkammer 10 ist eine Trommel 11 angeordnet, welche um ihre Trommelachse drehbar gelagert ist. Innerhalb der Trommel 11 befinden sich Granulatkörner 12 aus einem sorptionsfähigen Material, welche erfindungsgemäß mit Aluminium beschichtet werden sollen. Innerhalb der Trommel 11 ist ferner ein sich nicht mit der Trommel 11 mitdrehendes Gefäß 13 befestigt, aus dem Aluminium thermisch verdampft wird. Dazu wird ein Aluminiumdraht 14 derart in das Gefäß 13 nachgeführt, dass kontinuierlich Aluminium aus dem Gefäß 13 heraus verdampft wird.

Das Gefäß 13 ist innerhalb der Trommel 11 kopfüber angeordnet, so dass eine Verdampfung des Aluminiums von oben nach unten erfolgt. Der Verdampfungsprozess des Aluminiums wird durchgeführt, während sich die Trommel 11 dreht und somit die Granulatkörner 12 ständig durchgemischt werden. Auf diese Weise werden die Granulatkörner 12 rundherum mit einem relativ lockeren Gefüge aus Aluminium beschichtet. Der Beschichtungsprozess wird so lange fortgesetzt, bis eine äußere Aluminiumschicht mit einer Schichtdicke größer als 30 µm auf den Granulatkörnern 12 abgeschieden ist. Bevorzugt wird auf den Granulatkörnern 12 eine Schicht mit einer Schichtdicke von 50 µm bis 200 µm abgeschieden. Als Ergebnis des Beschichtungsvorgangs liegt erfindungsgemäßes Granulat für einen thermochemischen Wärmespeicher vor, welches sich durch eine gute Sorptionsfähigkeit und eine gute Wärmeleitfähigkeit auszeichnet.

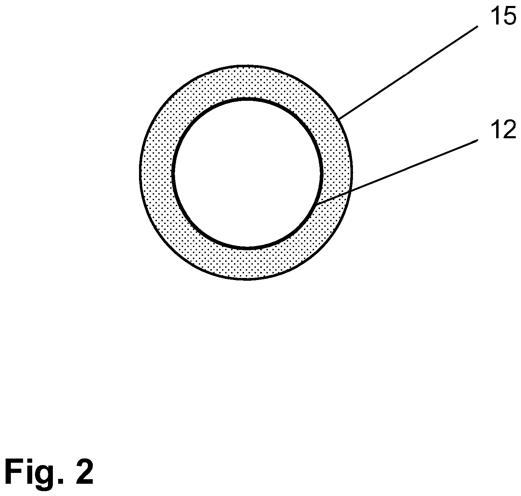

In Fig. 2 ist ein Granulatkorn 12 von erfindungsgemäßem Granulat schematisch im Schnitt dargestellt, welches eine äußere Schicht 15 aus Aluminium mit einer Schichtdicke größer als 30 µm aufweist. Die Granulatkörner 12 weisen einen mittleren Durchmesser von 0,2 mm bis 20 mm auf und können beispielsweise aus einem Silikat, aus einem Metallhydrid, aus MOFs und/oder aus Selective Water Sorbents bestehen.

## Patentansprüche

1. Granulat für einen thermochemischen Wärmespeicher, umfassend Granulatkörner (12) aus einem sorptionsfähigen Material, **dadurch gekennzeichnet, dass** die Granulatkörner eine äußere Schicht (15) mit einer Schichtdicke größer als 30 µm aufweisen, wobei das Schichtmaterial mindestens eines der Elemente Aluminium, Kupfer und Magnesium umfasst.

2. Granulat nach Anspruch 1, **dadurch gekennzeichnet, dass** die Granulatkörner (12) einen mittleren Durchmesser im Bereich von 0,2 mm bis 20 mm aufweisen.

3. Granulat nach Anspruch 2, **dadurch gekennzeichnet, dass** die Granulatkörner einen mittleren Durchmesser im Bereich von 1 mm bis 5 mm aufweisen.

4. Granulat nach einem der vorhergehenden Ansprüche, **dadurch gekennzeichnet, dass** die Granulatkörner (12) aus einem Silikat, aus einem Metallhydrid, aus MOFs und/oder aus Selective Water Sorbents bestehen.

5. Granulat nach einem der vorhergehenden Ansprüche, **dadurch gekennzeichnet, dass** die äußere Schicht (15) der Granulatkörner (12) eine Schichtdicke von 50 µm bis 200 µm aufweist.

6. Granulat nach Anspruch 5, **dadurch gekennzeichnet, dass** die äußere Schicht der Granulatkörner eine Porosität von mindestens 2 % aufweist.

7. Granulat nach einem der vorhergehenden Ansprüche, **dadurch gekennzeichnet, dass** die äußere Schicht einen Aluminium-Masseanteil von mindestens 50 % aufweist.

8. Verfahren zum Herstellen von Granulat für einen thermochemischen Wärmespeicher, umfassend Granulatkörner (12) aus einem sorptionsfähigen Material, **dadurch gekennzeichnet, dass** auf den Granulatkörnern (12) eine Schicht (15) mit einer Schichtdicke größer als 30 µm abgeschieden wird, wobei das Schichtmaterial mindestens eines der Elemente Aluminium, Kupfer und Magnesium aufweist.

9. Verfahren nach Anspruch 8, **dadurch gekennzeichnet, dass** die Schicht (15) mit einer Schichtdicke von 50 µm bis 200 µm abgeschieden wird.

10. Verfahren nach Anspruch 8 oder 9, **dadurch gekennzeichnet, dass** die Schicht mit einer Porosität größer als 2 % abgeschieden wird.

11. Verfahren nach einem der Ansprüche 8 bis 10, **dadurch gekennzeichnet, dass** die Schicht (15) mittels chemischer oder physikalischer Dampfabscheidung abgeschieden wird.

12. Verfahren nach Anspruch 10, **dadurch gekennzeichnet, dass** die Schicht (15) mittels thermischen Verdampfens abgeschieden wird.

13. Verfahren nach Anspruch 11, **dadurch gekennzeichnet, dass** die Schicht (15) mittels thermischen Verdampfens von Aluminium abgeschieden wird.

## Claims

1. Granulate for a thermochemical heat accumulator, comprising granulate particles (12) composed of a sorption-capable material, **characterized in that** the granulate particles comprise an outer layer (15) having a layer thickness greater than 30 µm, wherein the layer material comprises at least one of the elements aluminium, copper and magnesium.

2. Granulate according to Claim 1, **characterized in that** the granulate particles (12) have an average diameter in the range from 0.2 mm to 20 mm.

3. Granulate according to Claim 2, **characterized in that** the granulate particles have an average diameter in the range from 1 mm to 5 mm.

4. Granulate according to any of the preceding claims, **characterized in that** the granulate particles (12) consist of a silicate, of a metal hydride, of MOFs and/or of selective water sorbents.

5. Granulate according to any of the preceding claims, **characterized in that** the outer layer (15) of the granulate particles (12) has a layer thickness of 50 µm to 200 µm.

6. Granulate according to Claim 5, **characterized in that** the outer layer of the granulate particles has a porosity of at least 2%.

7. Granulate according to any of the preceding claims, **characterized in that** the outer layer has an aluminium mass fraction of at least 50%.

8. Method for producing granulate for a thermochemical heat accumulator comprising granulate particles (12) composed of a sorption-capable material, **characterized in that** a layer (15) is deposited on the granulate particles (12) with a layer thickness greater than 30 µm, wherein the layer material comprises at least one of the elements aluminium, copper and magnesium.

9. Method according to Claim 8, **characterized in that** the layer (15) is deposited with a layer thickness of 50 µm to 200 µm.

10. Method according to Claim 8 or 9, **characterized in that** the layer is deposited with a porosity greater than 2%.

11. Method according to any of Claims 8 to 10, **characterized in that** the layer (15) is deposited by chemical or physical vapor deposition.

12. Method according to Claim 10, **characterized in that** the layer (15) is deposited by thermal evaporation.

13. Method according to Claim 11, **characterized in that** the layer (15) is deposited by thermal evaporation of aluminium.

## Revendications

1. Granulés pour un accumulateur de chaleur thermochimique, comprenant des grains (12) de granulés composés d'un matériau sorbant, **caractérisés en ce que** les grains de granulés présentent une couche extérieure (15) dotée d'une épaisseur de couche supérieure à 30 µm, le matériau de couche comprenant au moins l'un des éléments aluminium, cuivre et magnésium.

2. Granulés selon la revendication 1, **caractérisés en ce que** les grains (12) de granulés présentent un diamètre moyen dans la plage de 0,2 mm à 20 mm.

3. Granulés selon la revendication 2, **caractérisés en ce que** les grains de granulés présentent un diamètre moyen dans la plage de 1 mm à 5 mm.

4. Granulés selon l'une quelconque des revendications précédentes, **caractérisés en ce que** les grains (12) de granulés sont constitués d'un silicate, d'un hydrure métallique, de MOFs et/ou de Sorbants Sélectifs de l'Eau.

5. Granulés selon l'une quelconque des revendications précédentes, **caractérisés en ce que** la couche extérieure (15) des grains (12) de granulés présente une épaisseur de couche de 50 µm à 200 µm.

6. Granulés selon la revendication 5, **caractérisés en ce que** la couche extérieure des grains de granulés présente une porosité d'au moins 2 %.

7. Granulés selon l'une quelconque des revendications précédentes, **caractérisés en ce que** la couche extérieure présente une proportion en masse d'aluminium d'au moins 50 %.

8. Procédé pour la préparation de granulés pour un accumulateur de chaleur thermochimique, comprenant des grains (12) de granulés composés d'un matériau sorbant, **caractérisé en ce qu'**une couche (15) dotée d'une épaisseur de couche supérieure à 30 µm est déposée sur les grains (12) de granulés, le matériau de couche présentant au moins l'un des éléments aluminium, cuivre et magnésium.

9. Procédé selon la revendication 8, **caractérisé en ce que** la couche (15) est déposée avec une épaisseur de couche de 50 µm à 200 µm.

10. Procédé selon la revendication 8 ou 9, **caractérisé en ce que** la couche est déposée avec une porosité supérieure à 2 %.

11. Procédé selon l'une quelconque des revendications 8 à 10, **caractérisé en ce que** la couche (15) est déposée par dépôt en phase vapeur chimique ou physique.

12. Procédé selon la revendication 10, **caractérisé en ce que** la couche (15) est déposée par évaporation thermique.

13. Procédé selon la revendication 11, **caractérisé en ce que** la couche (15) est déposée par évaporation thermique d'aluminium.
